# EUROPEAN PATENT SPECIFICATION

(11) **EP 4 198 786 B1**
(45) Date of publication and mention of the grant of the patent: **18.12.2024**
(21) Application number: 22175393.2
(22) Date of filing: 25.05.2022
(51) Int. Cl.: G06F 21/62

(54) **RULE-BASED TARGETED EXTRACTION AND ENCRYPTION OF SENSITIVE DOCUMENT FEATURES**
REGELBASIERTE GEZIELTE EXTRAKTION UND VERSCHLÜSSELUNG VON SENSIBLEN DOKUMENTENMERKMALEN
EXTRACTION CIBLÉE FONDÉE SUR DES RÈGLES ET CHIFFREMENT DE CARACTÉRISTIQUES DE DOCUMENTS SENSIBLES

(30) Priority: 14.12.2021 US 202117644107
(43) Date of publication of application: 21.06.2023
(73) Proprietor: Intuit Inc., Mountain View, CA 94043 (US)
(72) Inventor: SEILNACHT, Michael J., Mountain View, 94043 (US); VEPA, Sirish V., Mountain View, 94043 (US); SLATER, Richard Lee, Mountain View, 94043 (US); EDGINGTON, Cody Allyn, Mountain View, 94043 (US)
(74) Representative: D Young & Co LLP

(56) References cited:
- US-A1- 2003 051 054
- US-A1- 2008 222 734
- MAHENDRAN DARSHINI ET AL: "Review: Privacy-Preservation in the Context of Natural Language Processing", IEEE ACCESS, IEEE, USA, vol. 9, 29 October 2021 (2021-10-29), pages 147600 - 147612, XP011886993, DOI: 10.1109/ACCESS.2021.3124163

## Description

### INTRODUCTION

Aspects of the present disclosure relate to techniques for rule-based detection and encryption of sensitive information in documents.

### BACKGROUND

Every year millions of people, businesses, and organizations around the world utilize software applications to assist with countless aspects of life. In many cases, sensitive information may be processed and transmitted by software applications in order to provide various functions, such as management of health information, finances, schedules, employment records, and the like. Sensitive information, such as personally identifiable information (PII), is protected by various laws and regulations, and must generally be protected from unauthorized access by software purveyors and associated parties.

One manner in which sensitive information may be left vulnerable to unauthorized access is the storage and transmission of sensitive information in documents. For instance, a document containing sensitive user data may be sent to a support professional for help in resolving an issue, and the support professional may have no need and/or authorization to view the sensitive data, instead needing only to view non-sensitive data in the same document. In another example, a document containing sensitive information may be stored for future use in association with an application, and the stored document may be accessible to various parties, such as information technology (IT) professionals. As such, it is important to determine if documents contain sensitive information so that the sensitive information can be protected.

While there are existing techniques for encrypting documents that contain sensitive information, these techniques generally involve encrypting an entire document, and thus the entire document (e.g., including non-sensitive portions) can only be accessed by a party that is able to decrypt the document. Furthermore, existing techniques generally require each application or service that transmits or receives documents to natively implement encryption functionality, including rules for detecting sensitive information (which are generally hard-coded into an application), encryption techniques (e.g., algorithms used to encrypt sensitive information), exchange of encryption keys, and/or decryption of encrypted content. Thus, existing techniques may involve re-inventing encryption-related logic with the development of each new application or service as well as significant additional overhead for data sharing.

Therefore, what is needed is a solution for improved detection and encryption of sensitive information in documents.

### BRIEF SUMMARY

The present invention is defined by the appended independent claims. Preferred embodiments are set out in the dependent claims. Certain embodiments provide a method for rule-based document security as defined in independent claim 1.

Other embodiments provide a method for secure document reconstruction as defined in independent claim 7.

Other embodiments provide a system as defined in appended claim 10 and a computer readable medium as defined in appended claim 11.

The following description and the related drawings set forth in detail certain illustrative features of one or more embodiments.

US2003/0051054 A1 discloses a data security system and method adjunct to e-mail, browser or telecom program.

### BRIEF DESCRIPTION OF THE DRAWINGS

The appended figures depict certain aspects of the one or more embodiments and are therefore not to be considered limiting of the scope of this disclosure.
**FIG. 1** depicts an example of rule-based document security.
**FIG. 2** depicts an example of rule-based encryption and replacement of sensitive document components.
**FIG. 3** depicts an example related to reconstructing documents based on amended documents, encrypted document components, and associated metadata.
**FIG. 4** depicts example operations for rule-based document security.
**FIG. 5** depicts example operations for secure document reconstruction.
**FIGs. 6A** and **6B** depict example processing systems related to rule-based document security.

To facilitate understanding, identical reference numerals have been used, where possible, to designate identical elements that are common to the drawings. It is contemplated that elements and features of one embodiment may be beneficially incorporated in other embodiments without further recitation.

### DETAILED DESCRIPTION

Aspects of the present disclosure provide apparatuses, methods, processing systems, and computer-readable mediums for improved detection and encryption of sensitive information in documents.

According to certain embodiments, a set of rules specifies criteria for identifying various type of sensitive information in documents and, in some embodiments, specifies actions to perform to secure particular types of sensitive information. For example, a rule may involve detection of patterns (e.g., regular expression), identification of structural components in structured documents, such as extensible markup language (XML) documents, JavaScript object notation (JSON) objects, and/or the like, and other types of criteria that may indicate the presence of sensitive information. Rules may also indicate how certain types of sensitive information, when detected, are to be secured. For example, rules may indicate types of transforms to apply to sensitive information within a document (e.g., masking, complete redaction, or the like), particular encryption algorithms and/or encryption/signing keys to use for the sensitive information, and/or the like. Rules may be defined by an administrator, developer, subject matter expert, and/or other party familiar with encryption requirements, and/or may be learned automatically. For example, rules may be learned based on historical documents known to contain sensitive information, such as though supervised learning processes.

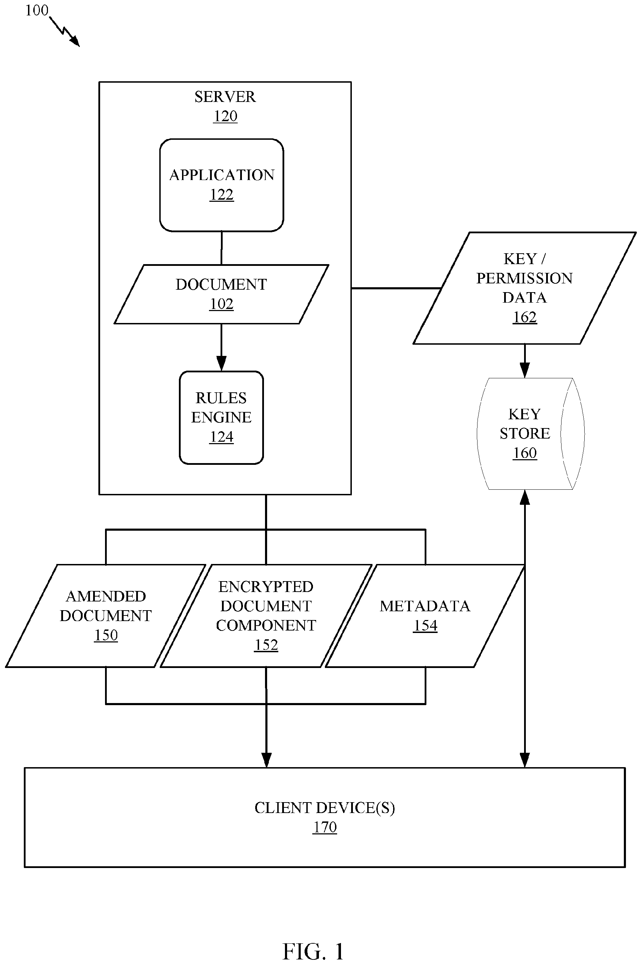

Advantageously, as described in more detail below with respect to **FIG. 1****,** rather than encrypting an entire document that contains sensitive information, techniques described herein involve targeted encryption of sensitive components identified within a document, and storing/transmitting encrypted sensitive components separately from an amended version of the document in which the sensitive components have been replaced with non-sensitive placeholders. In an example, if a bank account number is detected in a financial document based on one or more rules, the bank account number is encrypted using an encryption technique (e.g., which may be specified by a rule), and an amended version of the document is produced by replacing the bank account number with a non-sensitive placeholder, such as a generic number. In some embodiments, placeholders are selected to conform to the style of the sensitive information that they replace, such as including the same number and/or types of characters, so that the amended document can be processed in a manner similar to the original document (e.g., so that any automated processing performed on the document that expects particular types of content will still generally function correctly). The encrypted bank account number is then sent with the amended document to one or more endpoints, along with information (e.g., metadata) related to reconstructing the original document. For example, metadata transmitted with the encrypted bank account number and the amended document may indicate a location in the amended document to which the bank account number corresponds so that, once the bank account number is decrypted by an authorized endpoint, the decrypted bank account number can be restored to its proper place in the document (e.g., replacing the placeholder).

In some embodiments an encrypted sensitive component and an amended document are sent as separate payloads in the same transmission, while in other embodiments the encrypted sensitive component and the amended document are sent in separate transmissions (e.g., as separate payloads). If the encrypted sensitive component and the amended document are sent in separate transmissions, the metadata indicating how to reconstruct the document may be sent with either or both transmissions. A payload generally refers to the actual data transmitted by communicating endpoints in a packet, as opposed to metadata related to the packet that may be included, for example, in a header of the packet.

Encryption keys and/or associated permission information related to encrypted sensitive components may be stored in a centralized key store and/or may be otherwise shared with authorized parties. In certain embodiments, a key store manages access to encryption keys by applying access control rules to requests for encryption keys received from endpoints. For instance, access control rules may specify which users, groups, applications, and/or endpoints are authorized to access certain types of sensitive information. Thus, if the key store receives a request for an encryption key for a particular type of sensitive information (e.g., employee financial data) from an endpoint associated with a particular user (e.g., an accounting professional), the key store may apply access control rules to determine whether the particular user is authorized to access the particular type of sensitive information, and determine whether to provide the requested encryption key accordingly. In some aspects, access control rules may be defined by an administrator, developer, subject matter expert, and/or other party familiar with security requirements

Thus, embodiments of the present disclosure allow sensitive components of documents to be protected through rule-based encryption and access control measures while still allowing the documents to be accessed and utilized in an amended, non-sensitive form by parties that are not authorized to access the sensitive components. For example, a support professional may use an amended document to assist a user with resolving an issue (e.g., based on a user's name and address) without being granted access to encrypted sensitive components (e.g., social security number) of the document.

In some embodiments, document security functionality described herein is implemented by one or more components that are independent of the applications that produce, send, receive, and/or process the documents. For example, a proxy or filter component in front of an application (e.g., that receives traffic to and from the application and performs document security functionality with respect to the traffic before sending it on to the application and/or another endpoint), a plugin within an application, a browser extension, and/or the like may be used to implement various aspects of functionality described herein. In some cases, in a client-server architecture, documents associated with an application are transmitted from a server to one or more client devices. On the server side, a proxy component may receive documents sent by an application, and the proxy component may apply rules in order to detect and encrypt sensitive components of the documents, and may generate amended documents and/or metadata as described herein. The proxy component may then transmit the encrypted sensitive components, amended documents, and metadata to one or more client devices, or may return these items to the application so that the application can send them to one or more client devices. The proxy component may also send encryption keys for encrypted sensitive components and/or permission information to a key store and/or directly to one or more client devices, or to the application for transmission to the key store and/or one or more client devices.

On the client side (in this example), a proxy component may receive the encrypted sensitive components, amended documents, and metadata. The proxy component may request and/or receive an encryption key (e.g., from the key store) for the encrypted sensitive components (e.g., based on identifiers of the encrypted sensitive components), use the encryption key to decrypt the sensitive components, and reconstruct the documents by replacing placeholders in the amended documents with the decrypted sensitive components based on information in the metadata. The proxy component may then provide the reconstructed document to the client-side application.

Furthermore, in certain embodiments, data relating to detection and encryption of sensitive document components, generating amended documents, transmitting and receiving these items, requesting encryption keys, decrypting sensitive components, and reconstructing documents may be logged, such as for analysis and/or auditing purposes. Log data may be written by various components involved in the process to a centralized location (e.g., a data store or data lake) and/or may be maintained as metadata associated with the document. For example, data about which entities requested which keys, at what time, for what field or type of sensitive information, and/or the like may be logged by the key store. This log data may be used for security auditing, such as to determine whether unauthorized parties are attempting to access secure information.

Embodiments of the present disclosure improve upon existing security techniques in a variety of ways. For example, unlike techniques that rely only on hard-coded rules in an application for detecting sensitive information, embodiments described herein provide a rules engine that allows rules to be defined and applied in a more dynamic fashion, such as to documents associated with or used by a plurality of different applications. Furthermore, by encrypting only sensitive components of documents, and providing the encrypted sensitive components along with amended versions of documents that include non-sensitive placeholders, techniques described herein allow for more fine-grained access control for the contents of documents. For example, parties not authorized to access certain sensitive components of a document may still be able to access and utilize the parts of the document that they are authorized to access, as a non-sensitive version of the document is provided in an amended and usable format. By transmitting an amended version of the document separately from encrypted sensitive components of the document, with information that allows the original document to be reconstructed by endpoints authorized to access the sensitive components, techniques described herein allow various endpoints to utilize documents to the extent that they are authorized, without unnecessarily restricting access to non-sensitive content.

Additionally, embodiments of the present disclosure provide centralized access control for encryption keys related to encrypted sensitive portions of documents. Thus, rather than requiring applications themselves to individually manage access to secure data, a centralized key store as described herein provides consistent and easily-manageable access control for sensitive content in documents. Furthermore, certain embodiments involve implementing document security functionality separately from the underlying applications, such as in one or more proxy components, thereby allowing applications to achieve the benefits of the present disclosure without modification to underlying application code or redundantly implementing document security logic across multiple applications.

While rule-based encryption, amending of sensitive documents, centralized access control and security management, and other components of the present disclosure each involve various benefits individually (e.g., as described above), the combination of these components described herein provides additional benefits beyond the sum of the benefits provided by each individual component. For example, beyond providing the security of encryption, the security and usability of amended (e.g., redacted) documents, and the efficiency and consistency of centralized access control and security management, the particular combination of these components described herein further enables sending the same information (e.g., encrypted sensitive components, an amended document, and metadata) to all parties while providing each individual party with the precise subset of a document's content that that party is authorized to access.

### Example Computing Components for Rule-Based Document Security

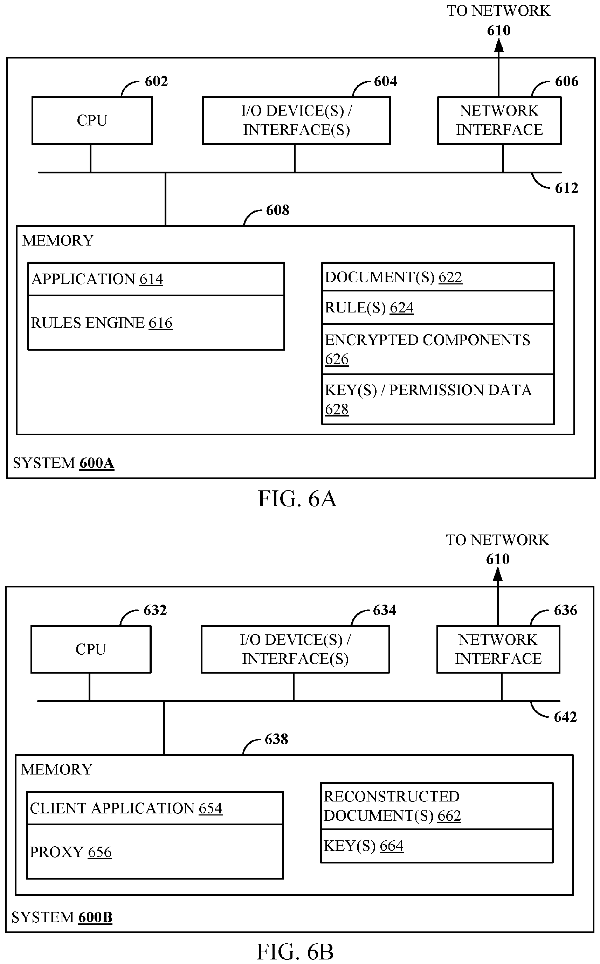

**FIG. 1** is an illustration 100 of an example related to rule-based document security. Illustration 100 includes a server 120, one or more client devices 170, and a key store 160 (e.g., which may represent one or more computing devices, as described in more detail below with respect to **FIGs. 6A** and **6B**).

Server 120 generally represents a computing device that serves data related to an application 122 to requesting endpoints, such as client device(s) 170. Server 120 comprises application 122, which involves the use of a document 102. For instance, application 122 may be a financial management application, and document 102 may be a tax document relating to a user of application 122. In some embodiments, document 102 may include information in various fields having different levels of sensitivity.

Rules engine 124 is a component that performs operations related to rule-based document security, such as by applying one or more rules to documents such as document 102 in order to identify and encrypt sensitive information. While rules engine 124 is depicted separately from application 122, alternative embodiments involve rules engine 124 being part of application 122, or being a component (e.g., plugin) that operates within application 122.

Rules engine 124 stores rules related to document security, which, for example, may have been defined by an administrator. Rules may specify criteria for detecting sensitive information and, in some embodiments, what actions to take in order to secure certain types of sensitive information when detected. A rule may include, for instance, specify a pattern such as a regular expression known to correspond to a type of sensitive information. One example of a pattern-based rule is searching for the pattern ##/##/#### or ##-##-####, where # indicates any number from 0-9, when searching for a date of birth. In other embodiments, rules may indicate structural aspects of documents known to be associated with sensitive information, such as an XPath for an XML document or a JSONPath for a JSON object. In some embodiments rules may indicate document coordinates and/or field labels. Rules may also relate to keywords, proximity to certain words or phrases, types of content (e.g., all numbers in a financial document), and/or the like. In some embodiments, rules may be learned and/or refined over time, such as using supervised learning techniques. In one example, a predictive model may be trained to detect certain types of sensitive information based on known instances of those types of sensitive information in historical documents.

Rules applied by rules engine 124 may also specify actions to take when certain types of sensitive information are detected in a document. For example, a rule may indicate that if personally identifiable information (PII) is detected in a document, the PII should be encrypted using a particular encryption algorithm (e.g., data encryption standard (DES), triple DES, advanced encryption standard (AES), and/or the like), and should be replaced in the document with a generic non-sensitive placeholder. In another example, a rule may indicate that if classified information is detected in a document, the classified information should be encrypted using a high-security encryption algorithm (e.g., 256-bit AES encryption), and should be replaced in the document with a generic non-sensitive placeholder. In some cases, a rule may include a direct link, such as a uniform resource locator (URL), to an encryption key and/or signing key that is to be used for a particular type of sensitive information. Thus, embodiments of the present disclosure allow for a balance between the higher levels of security provided by certain encryption techniques and the higher amounts of processing resources required for such techniques by only utilizing high-security techniques when appropriate for particular items of data within a document.

Rules engine 124 receives document 102, and applies one or more rules to the contents of document 102 in order to determine whether there are any sensitive components of document 102. If rules engine 124 detects any sensitive components, it may determine what actions to take based on a rule. In other embodiments, rules engine 124 always encrypts sensitive components and replaces them in the document with generic non-sensitive placeholders (e.g., regardless of whether a rule indicates to perform these actions). In certain embodiments a document itself may include metadata indicating sensitive components within the document, and rules engine 124 may apply rules to determine what actions to take with respect to the sensitive components indicated in the metadata.

In an example, rules engine 124 uses a particular encryption key to encrypt a sensitive component detected in document 102, and provides the key and, in some embodiments, permission data (e.g., indicating a type of sensitive information to which the key pertains and/or information related to which entities are authorized to access the key) at 162 to key store 160. In some embodiments, rules engine 124 uses existing keys for encryption, and the existing keys may already be stored in key store 160. In such embodiments, rules engine 124 may provide an indication of the key used along with permission data to key store 160. Keys and permission data are stored in key store 160, and key store 160 provides keys to requesting endpoints based on whether the endpoints are authorized to access the keys (e.g., as indicated in the permission data). In some cases, rules engine 124 and/or key store 160 further encrypt the encryption keys themselves with key encryption keys for additional security in transmission and storage of the keys. For example, rules engine 124 may encrypt a key with a key encryption key, and may provide the key encryption key directly to the endpoint (e.g., a client device 170) that it intends to access the key, while sending the encrypted key itself (without the key encryption key) to key store 160.

In some embodiments, key store 160 uses rules to determine whether to provide keys to requesting entities. For example, rules may be configured by an administrator (in one example), and may indicate which entities or types of entities are authorized to access which keys or which types of sensitive information associated with keys. In one example, a rule may state that only users in a "human resources" user group may access keys corresponding to sensitive information relating to employees' personal information. Thus, if key store 160 receives a request for a key corresponding to a user's social security number from a client device 170, and the request indicates that it is was initiated by a user in the human resources user group (e.g., based on active directory information related to the user that submitted the request), key store 160 may provide the requested key based on the rule. In another example, a client device 170 may receive a key encryption key from rules engine 124, and may use the key encryption key to decrypt an encryption key it receives from key store 160.

In some embodiments, a signing key or certificate may also be employed. For example, a trusted third party component may receive keys generated by rules engine 124 via a secure channel and sign the keys, returning encrypted messages to rules engine 124 indicating the keys. The third party may also provide a public key for the encrypted messages to one or more authorized endpoints (e.g., client devices 170) via one or more secure channels. As such, rules engine 124 may send the encrypted messages to key store 160 and/or directly to the authorized endpoints, and the authorized endpoints (e.g., that receive the encrypted messages either directly from rules engine 124 or key store 160) may use the public key from the third party to decrypt the encrypted message, and thereby may trust the integrity of the keys in the decrypted messages based on the trusted nature of the third party.

Rules engine 124 also generates an amended document 150 by replacing the sensitive component that was encrypted with a non-sensitive placeholder. The placeholder may, for example, be a randomly-generated or otherwise generic string that conforms to one or more characteristics of the sensitive information it is replacing. For instance, the placeholder may include the same type of characters (e.g., letters, numbers, special characters, and/or the like) and/or the same number of characters as the sensitive information it is replacing. In one example, a social security number is replaced with the placeholder "000-00-0000" in order to conform to the expected format of a social security number without including sensitive data.

Server 120 sends amended document 150 along with the encrypted document component 152 and metadata 154 to one or more client devices 170. In one example, amended document 150 and encrypted document 152 are sent as separate payloads in the same transmission, along with metadata 154. For example, the message may be organized as a tree, with the two payloads attached to a common parent node (e.g., identifying the document). In another example, amended document 150 is sent in a first transmission and encrypted document 152 and metadata 154 are sent in a second transmission. Metadata 154 generally includes information related to reconstructing document 102 based on amended document 150 and encrypted document component 152. For example, metadata 154 may indicate a location within amended document 150 to which encrypted document component 152 corresponds.

A given client device 170 may request a key for encrypted document component 152 from key store 160, such as by sending a request for the key. Key store 160 (or a related component) may determine whether to provide the key in response to the request based on one or more characteristics indicated in the request, such as based on the user, application, and/or device associated with the request (e.g., based on the permission data 162 and/or access control rules).

If the given client device 170 receives a key for encrypted document component 152, it uses the key to decrypt encrypted document component 152. The given client device 170 may then reconstruct document 102 by inserting the decrypted document component into amended document 150 at a location indicated by metadata 154, which may involve replacing a placeholder with the original contents of the document.

If the given client device 170 does not receive a key, such as if the given client device 170 does not request the key or if a request from the given client device 170 for the key is denied (e.g., because the given client device 170 and/or an associated user and/or application is not authorized to access the sensitive document component), then the given client device 170 may utilize and/or store amended document 150 as-is. For example, if the given client device 170 belongs to a support professional, the support professional may use amended document 150 to provide one or more services to a user, such as assisting the user with correcting or submitting the original document or resolving an issue related to creation, use, and/or submission of the document.

### Example Encryption and Replacement of Sensitive Document Components

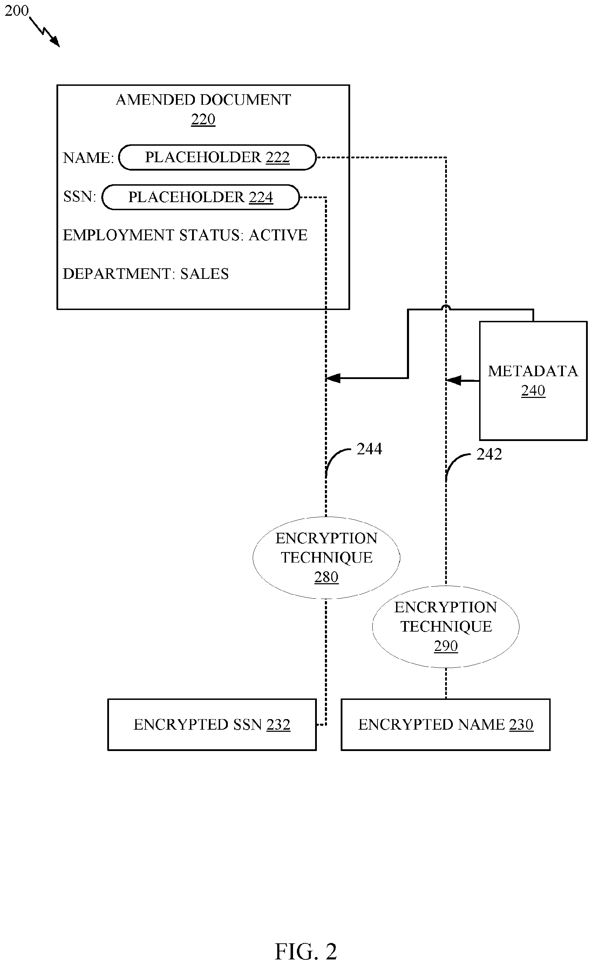

**FIG. 2** is an illustration 200 of an example of rule-based encryption and replacement of sensitive document components.

Illustration 200 includes an amended document 220, which may have been generated by one or more components of a rule-based document security system, such as rules engine 124 of **FIG. 1****,** based on an original document related to an application.

For example, one or more rules may be applied in order to detect a name and a social security number (SSN) in the document, and the name and SSN may be encrypted based on the one or more rules (e.g., using one or more encryption algorithms or types of encryption algorithms indicated in the one or more rules) in order to produce encrypted name 230 and encrypted SSN 232. For example, a first encryption technique 280 is used to produce encrypted SSN 232 and a second encryption technique 290 is used to produce encrypted name 230. In one example, encryption technique 280 is a higher-security form of encryption (e.g., 256-bit encryption) than encryption technique 290 (e.g., 128-bit encryption), such as due to the higher sensitivity of an SSN as compared to a name. Then, the name and SSN are replaced in the document with placeholders 222 and 224 in order to produce amended document 220.

Placeholders 222 and 224 may be non-sensitive placeholders that have one or more characteristics of the sensitive components (e.g., name and SSN) that they are replacing. For example, placeholder 222 may be a generic name (e.g., "John Doe") and placeholder 224 may be a generic SSN (e.g., 000-00-0000). Thus, amended document 220 may still be able to be utilized by one or more entities not authorized to access the sensitive components (e.g., name and SSN) of the original document.

Metadata 240 indicates a mapping 242 between encrypted name 230 and placeholder 222 and a mapping 244 between encrypted SSN 232 and placeholder 224. For instance, mappings 242 and 244 may indicate locations in amended document 220 (e.g., coordinates relative to an origin, structural components in a structured document, text strings of placeholders 222 and 224, and/or the like) that may be used to determine where encrypted SSN 232 and encrypted name 230 belong in amended document 220. Thus, metadata 240 allows the original document to be reconstructed based on amended document 220 and encrypted name 230 and encrypted SSN 232 (e.g., if the encrypted components are decrypted).

### Example Secure Document Reconstruction

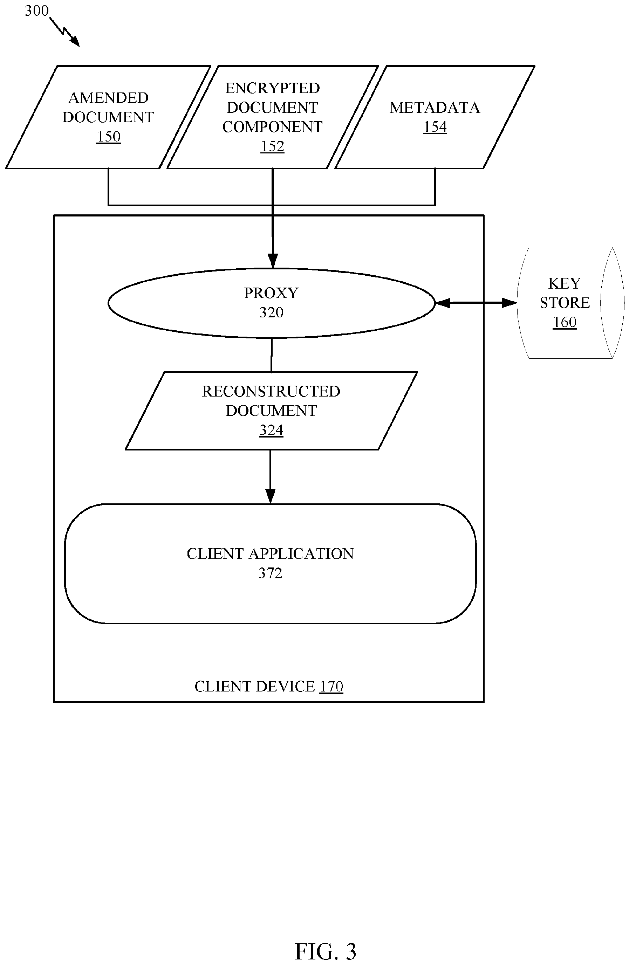

**FIG. 3** is an illustration 300 of an example related to reconstructing documents based on amended documents, encrypted document components, and associated metadata.

Illustration 300 includes amended document 150, encrypted document component 152, metadata 154, key store 160, and a client device 170 of **FIG. 1****.**

Amended document 150, encrypted document component 152, and metadata 154 are received by a proxy 320 within client device 170. For example, proxy 320 may be a software component separate from a client application 372 (e.g., the consumer of the document) that implements decryption and reconstruction operations in order to reconstruct documents for consumption by client application 372. Proxy 320 may be implemented as an independent application, a browser add-on or plug-in (e.g., of client application 372 is a browser), a component within a network adapted of client device 170, and/or the like. In some cases, proxy 320 is implemented in the data path of application 372 such it has the ability to receive and process data upstream prior to providing it downstream to application 372.

Proxy 320 interacts with key store 160 to retrieve a key for decrypting encrypted document component 152, such as by submitting a request for the key (e.g., including one or more characteristics of client device 170, client application 372, and/or a user in the request) and receiving the key in response to the request (e.g., if key store 160 determines to grant access to the key based on access control rules).

Proxy 320 uses the key to decrypt encrypted document component 152, and then uses metadata 154 to produce reconstructed document 324 by replacing a placeholder in amended document 150 with the decrypted document component (e.g., at a location in the document indicated by metadata 154, as described above with respect to **FIG. 2**).

Proxy 320 then provides reconstructed document 324 to client application 372, which consumes the document without having any need to know of the encryption, amending, decryption, and/or reconstruction processes related to the document. Thus, the use of proxy 320 separates document security logic from the client application itself, allowing techniques described herein to be utilized with applications that do not natively provide such security functionality.

Proxy 320 represents an example of an application-external implementation of document security techniques described herein, but other embodiments may involve a plug-in, module, integration, extension, or even native code of an application being configured to perform certain operations described herein for document security. In some embodiments, proxy 320 may be a microservice in a microservices-based deployment of an application.

### Example Operations for Rule-Based Document Security

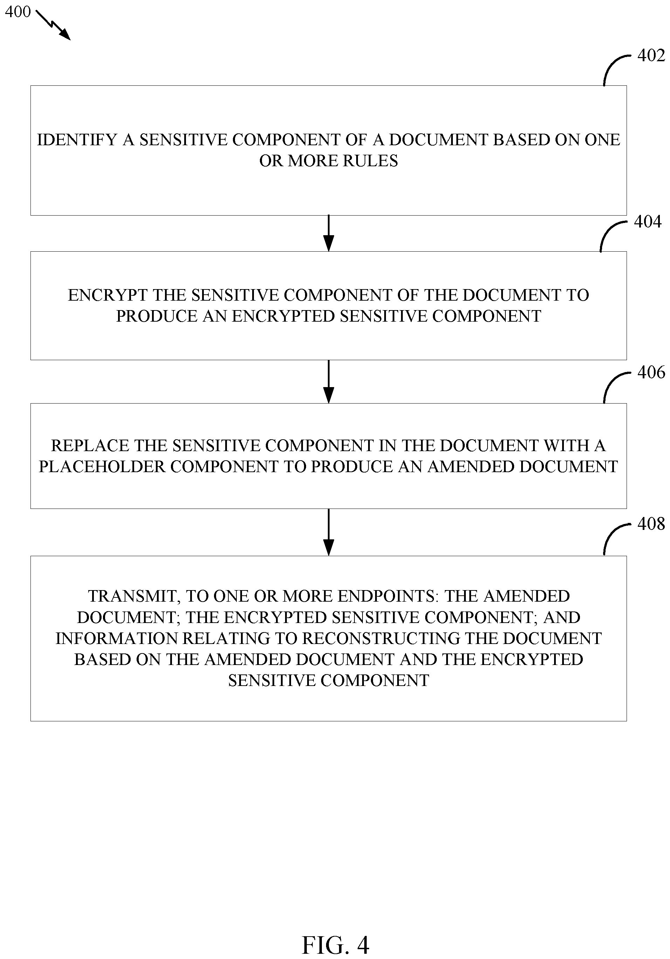

**FIG. 4** depicts example operations 400 related to rule-based document security. For example, operations 400 may be performed by one or more components of server 120, one or more client devices 170, and/or key store 160 of **FIG. 1****.**

Operations 400 begin at step 402, with identifying a sensitive component of a document based on one or more rules. In some embodiments, identifying the sensitive component of the document based on the one or more rules comprises one or more of: analyzing one or more structural elements of the document based on the one or more rules; or comparing text in the document to one or more patterns based on the rules. The one or more rules may, for example, specify a type of encryption to use for encrypting the sensitive component of the document.

Operations 400 continue at step 404, with encrypting the sensitive component of the document to produce an encrypted sensitive component.

Operations 400 continue at step 406, with replacing the sensitive component in the document with a placeholder component to produce an amended document.

Operations 400 continue at step 408, with transmitting, to one or more endpoints: the amended document; the encrypted sensitive component; and information relating to reconstructing the document based on the amended document and the encrypted sensitive component. In some embodiments, the amended document and the encrypted sensitive component are transmitted to the one or more endpoints as separate payloads. For example, the separate payloads may be associated with a common parent node in a message transmitted to the one or more endpoints.

In certain embodiments, the amended document and the encrypted sensitive component are transmitted to the one or more endpoints as separate transmissions.

In one example, a first endpoint of the one or more endpoints is authorized to access the amended document and not authorized to access the encrypted sensitive component, while a second endpoint of the one or more endpoints is authorized to access the amended document and the encrypted sensitive component.

Some embodiments further include sending an encryption key for the encrypted sensitive component to a key store, wherein the second endpoint is granted access to the encryption key in the key store.

Certain embodiments further comprise identifying an additional sensitive component of the document based on one or more additional rules and encrypting the additional sensitive component using a different type of encryption specified in the one or more additional rules, wherein the different type of encryption is different than the type of encryption used for encrypting the sensitive component of the document.

Note that **FIG. 4** is one example of method 400, but in other examples, fewer, additional, or alternative steps may be included consistent with the various examples described in this disclosure.

### Example Operations for Secure Document Reconstruction

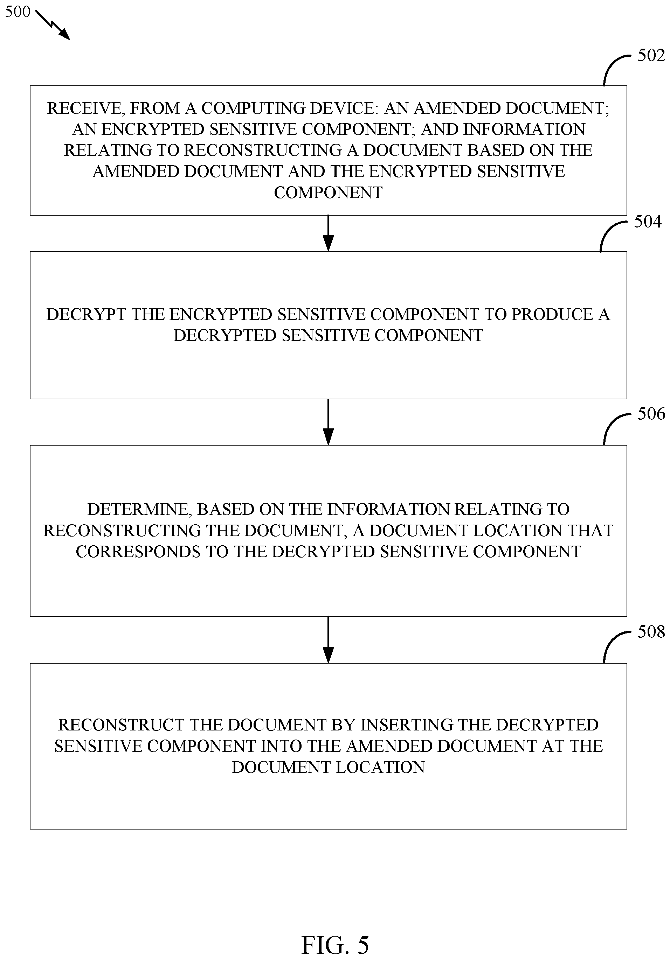

**FIG. 5** depicts example operations 500 related to secure document reconstruction. For example, operations 500 may be performed by one or more components of a client device 170 of **FIG. 1****.**

Operations 500 begin at step 502, with receiving, from a computing device: an amended document; an encrypted sensitive component; and information relating to reconstructing a document based on the amended document and the encrypted sensitive component.

Operations 500 continue at step 504, with decrypting the encrypted sensitive component to produce a decrypted sensitive component.

Operations 500 continue at step 506, with determining, based on the information relating to reconstructing the document, a document location that corresponds to the decrypted sensitive component.

Operations 500 continue at step 508, with reconstructing the document by inserting the decrypted sensitive component into the amended document at the document location.

Note that **FIG. 5** is one example of method 500, but in other examples, fewer, additional, or alternative steps may be included consistent with the various examples described in this disclosure.

### Example Computing Systems

**FIG. 6A** illustrates an example system 600A with which embodiments of the present disclosure may be implemented. For example, system 600A may correspond to server 120 of **FIG. 1****,** and may be configured to perform operations 400 of **FIG. 4****.**

System 600A includes a central processing unit (CPU) 602, one or more I/O device interfaces 604 that may allow for the connection of various I/O devices (e.g., keyboards, displays, mouse devices, pen input, etc.) to the system 600A, network interface 606, a memory 608, and an interconnect 612. It is contemplated that one or more components of system 600A may be located remotely and accessed via a network 610. It is further contemplated that one or more components of system 600A may comprise physical components or virtualized components.

CPU 602 may retrieve and execute programming instructions stored in the memory 608. Similarly, the CPU 602 may retrieve and store application data residing in the memory 608. The interconnect 612 transmits programming instructions and application data, among the CPU 602, I/O device interface 604, network interface 606, and memory 608. CPU 602 is included to be representative of a single CPU, multiple CPUs, a single CPU having multiple processing cores, and other arrangements.

Additionally, the memory 608 is included to be representative of a random access memory or the like. In some embodiments, memory 608 may comprise a disk drive, solid state drive, or a collection of storage devices distributed across multiple storage systems. Although shown as a single unit, the memory 608 may be a combination of fixed and/or removable storage devices, such as fixed disc drives, removable memory cards or optical storage, network attached storage (NAS), or a storage area-network (SAN).

As shown, memory 608 includes application 614 and rules engine 615, which may be representative of application 122 and rules engine 124 of **FIG. 1****.**

Memory 608 further comprises document(s) 622, which may include document 102 and amended document 150 of **FIG. 1** and amended document 220 of **FIG. 2****.** Memory 608 further comprises rule(s) 624, which may include rules utilized by rules engine 616. Memory 608 further comprises encrypted components 626, which may include encrypted document component 152 of **FIG. 1****,** and encrypted SSN 232 and encrypted name 230 of **FIG. 2****.** Memory 608 further comprises key(s)/permission data 628, which may include key/permission data 162 of **FIG. 1****.**

**FIG. 6B** illustrates an example system 600B with which embodiments of the present disclosure may be implemented. For example, system 600B may correspond to a client device 170 of **FIG. 1****,** and may be configured to perform operations 500 of **FIG. 5****.**

System 600B includes a central processing unit (CPU) 632, one or more I/O device interfaces 634 that may allow for the connection of various I/O devices (e.g., keyboards, displays, mouse devices, pen input, etc.) to the system 600B, network interface 636, a memory 638, and an interconnect 642. It is contemplated that one or more components of system 600B may be located remotely and accessed via a network 610. It is further contemplated that one or more components of system 600B may comprise physical components or virtualized components.

CPU 632 may retrieve and execute programming instructions stored in the memory 638. Similarly, the CPU 632 may retrieve and store application data residing in the memory 638. The interconnect 642 transmits programming instructions and application data, among the CPU 632, I/O device interface 634, network interface 636, and memory 638. CPU 632 is included to be representative of a single CPU, multiple CPUs, a single CPU having multiple processing cores, and other arrangements.

Additionally, the memory 638 is included to be representative of a random access memory or the like. In some embodiments, memory 638 may comprise a disk drive, solid state drive, or a collection of storage devices distributed across multiple storage systems. Although shown as a single unit, the memory 638 may be a combination of fixed and/or removable storage devices, such as fixed disc drives, removable memory cards or optical storage, network attached storage (NAS), or a storage area-network (SAN).

As shown, memory 638 includes client application 654 and proxy 656, which may be representative of client application 372 and proxy 320 of **FIG. 3****.**

Memory 638 further comprises reconstructed document(s) 662, which may include reconstructed document 324 of **FIG. 3****.** Memory 638 further comprises key(s) 664, which may include one or more keys received from key store 160 or rules engine 124 of **FIG. 1****.**

### Additional Considerations

The preceding description provides examples, and is not limiting of the scope, applicability, or embodiments set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

The preceding description is provided to enable any person skilled in the art to practice the various embodiments described herein. Various modifications to these embodiments will be readily apparent to those skilled in the art, and the generic principles defined herein may be applied to other embodiments. For example, changes may be made in the function and arrangement of elements discussed without departing from the scope of the disclosure. Various examples may omit, substitute, or add various procedures or components as appropriate. Also, features described with respect to some examples may be combined in some other examples. For example, an apparatus may be implemented or a method may be practiced using any number of the aspects set forth herein. In addition, the scope of the disclosure is intended to cover such an apparatus or method that is practiced using other structure, functionality, or structure and functionality in addition to, or other than, the various aspects of the disclosure set forth herein. It should be understood that any aspect of the disclosure disclosed herein may be embodied by one or more elements of a claim.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and other operations. Also, "determining" may include receiving (e.g., receiving information), accessing (e.g., accessing data in a memory) and other operations. Also, "determining" may include resolving, selecting, choosing, establishing and other operations.

The methods disclosed herein comprise one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims. Further, the various operations of methods described above may be performed by any suitable means capable of performing the corresponding functions. The means may include various hardware and/or software component(s) and/or module(s), including, but not limited to a circuit, an application specific integrated circuit (ASIC), or processor. Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

A processing system may be implemented with a bus architecture. The bus may include any number of interconnecting buses and bridges depending on the specific application of the processing system and the overall design constraints. The bus may link together various circuits including a processor, machine-readable media, and input/output devices, among others. A user interface (e.g., keypad, display, mouse, joystick, etc.) may also be connected to the bus. The bus may also link various other circuits such as timing sources, peripherals, voltage regulators, power management circuits, and other types of circuits, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media, such as any medium that facilitates transfer of a computer program from one place to another. The processor may be responsible for managing the bus and general processing, including the execution of software modules stored on the computer-readable storage media. A computer-readable storage medium may be coupled to a processor such that the processor can read information from, and write information to, the storage medium. In the alternative, the storage medium may be integral to the processor. By way of example, the computer-readable media may include a transmission line, a carrier wave modulated by data, and/or a computer readable storage medium with instructions stored thereon separate from the wireless node, all of which may be accessed by the processor through the bus interface. Alternatively, or in addition, the computer-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module, it will be understood that such functionality is implemented by the processor when executing instructions from that software module.

The following claims are not intended to be limited to the embodiments shown herein, but are to be accorded the full scope consistent with the language of the claims. Within a claim, reference to an element in the singular is not intended to mean "one and only one" unless specifically so stated, but rather "one or more." Unless specifically stated otherwise, the term "some" refers to one or more.

The invention is defined in the appended claims.

Thus, from one perspective, there has now been described techniques for rule-based document security. Embodiments include receiving, from a computing device: an amended document; an encrypted sensitive component; and information relating to reconstructing a document based on the amended document and the encrypted sensitive component. Embodiments include decrypting the encrypted sensitive component to produce a decrypted sensitive component. Embodiments include determining, based on the information relating to reconstructing the document, a document location that corresponds to the decrypted sensitive component. Embodiments include reconstructing the document by inserting the decrypted sensitive component into the amended document at the document location.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

## Claims

1. A method for rule-based document security, comprising:
identifying a sensitive component of a document based on one or more rules;
encrypting the sensitive component of the document to produce an encrypted sensitive component;
replacing the sensitive component in the document with a placeholder component to produce an amended document; and
transmitting, to one or more endpoints:
the amended document;
the encrypted sensitive component; and
information relating to reconstructing the document based on the amended document and the encrypted sensitive component
wherein the amended document and the encrypted sensitive component are transmitted to the one or more endpoints as separate transmissions
further comprising sending an encryption key for the encrypted sensitive component to a key store.

2. The method of Claim 1, wherein the amended document and the encrypted sensitive component are transmitted to the one or more endpoints as separate payloads.

3. The method of Claim 2, wherein the separate payloads are associated with a common parent node in a message transmitted to the one or more endpoints.

4. The method of any preceding Claim, wherein identifying the sensitive component of the document based on the one or more rules comprises one or more of:
analyzing one or more structural elements of the document based on the one or more rules; or
comparing text in the document to one or more patterns based on the rules.

5. The method of any preceding Claim, wherein the one or more rules specify a type of encryption to use for encrypting the sensitive component of the document.

6. The method of Claim 5, further comprising:
identifying an additional sensitive component of the document based on one or more additional rules; and
encrypting the additional sensitive component using a different type of encryption specified in the one or more additional rules, wherein the different type of encryption is different than the type of encryption used for encrypting the sensitive component of the document.

7. A method for secure document reconstruction, comprising:
receiving, from a computing device:
an amended document;
an encrypted sensitive component; and
information relating to reconstructing a document based on the amended document and the encrypted sensitive component;
decrypting the encrypted sensitive component to produce a decrypted sensitive component;
determining, based on the information relating to reconstructing the document, a document location that corresponds to the decrypted sensitive component; and
reconstructing the document by inserting the decrypted sensitive component into the amended document at the document location,
wherein the amended document and the encrypted sensitive component are received as separate transmissions, further comprising receiving a key for decrypting the encrypted sensitive component from a key store.

8. The method of Claim 7, wherein the amended document and the encrypted sensitive component are received as separate payloads.

9. The method of Claim 8, wherein the separate payloads are associated with a common parent node in a message received from the computing device.

10. A system for rule-based document security, comprising:
one or more processors; and
a memory comprising instructions that, when executed by the one or more processors, cause the system to perform the method of any of Claims 1 to 6.

11. A computer readable medium comprising computer-implementable instructions for causing a computer to become configured to carry out the method of any of Claims 1 to 9, or to become configured as the system of Claim 10.

## Patentansprüche

1. Verfahren für eine regelbasierte Dokumentensicherheit, umfassend:
Identifizieren einer sensiblen Komponente eines Dokuments basierend auf einer oder mehreren Regeln;
Verschlüsseln der sensiblen Komponente des Dokuments, um eine verschlüsselte sensible Komponente zu produzieren;
Ersetzen der sensiblen Komponente in dem Dokument durch eine Platzhalterkomponente, um ein abgeändertes Dokument zu produzieren; und
Übertragen, zu einem oder mehreren Endpunkten:
das abgeänderte Dokument;
die verschlüsselte sensible Komponente; und
von Informationen, die sich auf ein Wiederherstellen des Dokuments basierend auf dem abgeänderten Dokument und der verschlüsselten sensiblen Komponente beziehen,
wobei das abgeänderte Dokument und die verschlüsselte sensible Komponente als separate Übertragungen zu dem einen oder den mehreren Endpunkten übertragen werden,
wobei das Verfahren ferner ein Senden eines Verschlüsselungsschlüssels für die verschlüsselte sensible Komponente zu einem Schlüsselspeicher umfasst.

2. Verfahren nach Anspruch 1, wobei das abgeänderte Dokument und die verschlüsselte sensible Komponente als separate Nutzdaten zu dem einen oder den mehreren Endpunkten übertragen werden.

3. Verfahren nach Anspruch 2, wobei die separaten Nutzdaten mit einem gemeinsamen Elternknoten in einer Nachricht assoziiert sind, die zu dem einen oder den mehreren Endpunkten übertragen wird.

4. Verfahren nach einem der vorhergehenden Ansprüche, wobei das Identifizieren der sensiblen Komponente des Dokuments basierend auf der einen oder den mehreren Regeln eines oder mehrere umfasst von:
Analysieren eines oder mehrerer struktureller Elemente des Dokuments basierend auf der einen oder den mehreren Regeln; oder
Vergleichen, basierend auf den Regeln, eines Texts in dem Dokument mit einem oder mehreren Mustern.

5. Verfahren nach einem der vorhergehenden Ansprüche, wobei die eine oder mehreren Regeln einen Verschlüsselungstyp spezifizieren, der für das Verschlüsseln der sensiblen Komponente des Dokuments verwendet werden muss.

6. Verfahren nach Anspruch 5, das ferner umfasst:
Identifizieren einer zusätzlichen sensiblen Komponente des Dokuments basierend auf einer oder mehreren zusätzlichen Regeln; und
Verschlüsseln der zusätzlichen sensiblen Komponente unter Verwendung eines anderen Verschlüsselungstyps, der in der einen oder den mehreren zusätzlichen Regeln spezifiziert wird, wobei der andere Verschlüsselungstyp verschieden von dem Verschlüsselungstyp ist, der für das Verschlüsseln der sensiblen Komponente des Dokuments verwendet wird.

7. Verfahren für eine sichere Dokumentenwiederherstellung:
Empfangen, von einer Computervorrichtung:
eines abgeänderten Dokuments;
einer verschlüsselten sensiblen Komponente; und
von Informationen, die sich auf ein Wiederherstellen eines Dokuments basierend auf dem abgeänderten Dokument und der verschlüsselten sensiblen Komponente beziehen;
Entschlüsseln der verschlüsselten sensiblen Komponente, um eine entschlüsselte sensible Komponente zu produzieren;
Ermitteln, basierend auf den Informationen, die sich auf ein Wiederherstellen des Dokuments beziehen, eines Dokumentorts, welcher der entschlüsselten sensiblen Komponente entspricht; und
Wiederherstellen des Dokuments, indem die entschlüsselte sensible Komponente an dem Dokumentort in das abgeänderte Dokument eingefügt wird,
wobei das abgeänderte Dokument und die verschlüsselte sensible Komponente als separate Übertragungen empfangen werden, wobei das Verfahren ferner ein Empfangen eines Schlüssels zum Entschlüsseln der verschlüsselten sensiblen Komponente aus einem Schlüsselspeicher umfasst.

8. Verfahren nach Anspruch 7, wobei das abgeänderte Dokument und die verschlüsselte sensible Komponente als separate Nutzdaten empfangen werden.

9. Verfahren nach Anspruch 8, wobei die separaten Nutzdaten mit einem gemeinsamen Elternknoten in einer Nachricht assoziiert sind, die von der Computervorrichtung empfangen wird.

10. System für eine regelbasierte Dokumentensicherheit, umfassend:
einen oder mehrere Prozessoren; und
einen Speicher, der Anweisungen umfasst, die, wenn sie von dem einen oder den mehreren Prozessoren ausgeführt werden, das System veranlassen, das Verfahren nach einem der Ansprüche 1 bis 6 durchzuführen.

11. Computerlesbares Medium, das in einem Computer implementierbare Anweisungen umfasst, um zu veranlassen, dass ein Computer konfiguriert wird, um das Verfahren nach einem der Ansprüche 1 bis 9 auszuführen oder als das System nach Anspruch 10 konfiguriert zu werden.

## Revendications

1. Procédé de sécurité de documents basée sur des règles, comportant les étapes consistant à :
identifier un composant sensible d'un document d'après une ou plusieurs règles ;
chiffrer le composant sensible du document pour produire un composant sensible chiffré ;
remplacer le composant sensible dans le document par un composant d'espace réservé pour produire un document retouché ; et
transmettre, à un ou plusieurs points d'extrémités :
le document retouché ;
le composant sensible chiffré ; et
des informations se rapportant à la reconstitution du document d'après le document retouché et le composant sensible chiffré,
le document retouché et le composant sensible chiffré étant transmis au(x) point(s) d'extrémité(s) en tant que transmissions séparées,
comportant en outre l'envoi d'une clé de chiffrement relative au composant sensible chiffré à un magasin de clés.

2. Procédé selon la revendication 1, le document retouché et le composant sensible chiffré étant transmis au(x) point(s) d'extrémité(s) en tant que charges utiles séparées.

3. Procédé selon la revendication 2, les charges utiles séparées étant associées à un noeud parent commun dans un message transmis au(x) point(s) d'extrémité(s).

4. Procédé selon l'une quelconque des revendications précédentes, l'identification du composant sensible du document d'après la ou les règles comportant une ou plusieurs des étapes consistant à :
analyser un ou plusieurs éléments structuraux du document d'après la ou les règles ; ou
comparer du texte présent dans le document à un ou plusieurs modèles d'après les règles.

5. Procédé selon l'une quelconque des revendications précédentes, la ou les règles spécifiant un type de chiffrement à utiliser pour chiffrer le composant sensible du document.

6. Procédé selon la revendication 5, comportant en outre :
l'identification d'un composant sensible supplémentaire du document d'après une ou plusieurs règles supplémentaires ; et
le chiffrement du composant sensible supplémentaire à l'aide d'un type de chiffrement différent spécifié dans la ou les règles supplémentaires, le type de chiffrement différent étant différent du type de chiffrement utilisé pour chiffrer le composant sensible du document.

7. Procédé de reconstitution sécurisée de documents, comportant les étapes consistant à :
recevoir, en provenance d'un dispositif informatique :
un document retouché ;
un composant sensible chiffré ; et
des informations se rapportant à la reconstitution d'un document d'après le document retouché et le composant sensible chiffré ;
déchiffrer le composant sensible chiffré pour produire un composant sensible déchiffré ;
déterminer, d'après les informations se rapportant à la reconstitution du document, un emplacement de document qui correspond au composant sensible déchiffré ; et
reconstituer le document en insérant le composant sensible déchiffré dans le document retouché à l'emplacement de document,
le document retouché et le composant sensible chiffré étant reçus en tant que transmissions séparées, comportant en outre la réception d'une clé destinée à déchiffrer le composant sensible chiffré en provenance d'un magasin de clés.

8. Procédé selon la revendication 7, le document retouché et le composant sensible chiffré étant reçus en tant que charges utiles séparées.

9. Procédé selon la revendication 8, les charges utiles séparées étant associées à un noeud parent commun dans un message reçu en provenance du dispositif informatique.

10. Système de sécurité de documents basée sur des règles, comportant :
un ou plusieurs processeurs ; et
une mémoire comportant des instructions qui, lorsqu'elles sont exécutées par le ou les processeurs, amènent le système à réaliser le procédé selon l'une quelconque des revendications 1 à 6.

11. Support lisible par ordinateur comportant des instructions susceptibles d'être mises en œuvre par ordinateur pour amener un ordinateur à devenir configuré pour réaliser le procédé selon l'une quelconque des revendications 1 à 9, ou à devenir configuré comme le système selon la revendication 10.
